# EUROPÄISCHE PATENTSCHRIFT

(11) **EP 3 502 734 B1**
(45) Veröffentlichungstag und Bekanntmachung des Hinweises auf die Patenterteilung: **11.06.2025**
(21) Anmeldenummer: 17209948.3
(22) Anmeldetag: 22.12.2017
(51) Int. Cl.: G01S 7/4865, G01S 7/285, G01S 7/526, G01S 7/497, G01S 7/40, G01S 7/52

(54) **DISTANZSENSOR**
DISTANCE SENSOR
CAPTEUR DE DISTANCE

(43) Veröffentlichungstag der Anmeldung: 26.06.2019
(73) Patentinhaber: Leuze electronic GmbH + Co. KG, 73277 Owen/Teck (DE)
(72) Erfinder: Kock, Dennis, 82152 Krailling (DE)
(74) Vertreter: Ruckh, Rainer Gerhard

(56) Entgegenhaltungen:
- EP-A1- 1 876 468
- CLAUDIO FAVI ET AL: "A 17ps time-to-digital converter implemented in 65nm FPGA technology", FIELD PROGRAMMABLE GATE ARRAYS, ACM, 2 PENN PLAZA, SUITE 701 NEW YORK NY 10121-0701 USA, 22 February 2009 (2009-02-22), pages 113 - 120, XP058287913, ISBN: 978-1-60558-410-2, DOI: 10.1145/1508128.1508145
- CHEN HAOCHANG ET AL: "A Low Nonlinearity, Missing-Code Free Time-to-Digital Converter Based on 28-nm FPGAs With Embedded Bin-Width Calibrations", IEEE TRANSACTIONS ON INSTRUMENTATION AND MEASUREMENT, IEEE SERVICE CENTER, PISCATAWAY, NJ, US, vol. 66, no. 7, 1 July 2017 (2017-07-01), pages 1912 - 1921, XP011651875, ISSN: 0018-9456, [retrieved on 20170607], DOI: 10.1109/TIM.2017.2663498

## Beschreibung

Die Erfindung betrifft einen Distanzsensor und ein Verfahren zur Abstandsbestimmung von Objekten mittels eines Distanzsensors.

Ein derartiger Distanzsensor umfasst generell einen Sendepulse emittierenden Sender, einen Empfangspulse empfangenden Empfänger sowie eine Auswerteeinheit. Zur Abstandsbestimmung von Objekten in einem Überwachungsbereich werden vom Sender emittierte Sendepulse zu dem jeweiligen Objekt geführt und von diesem als Empfangspulse zum Empfänger reflektiert. In der Auswerteeinheit wird die Laufzeit der Sendepulse zum Objekt und zurück zum Empfänger ermittelt. Aus dieser Laufzeit wird die Distanz des Objekts zum Distanzsensor ermittelt.

Um auch kleine Distanzen im Millimeter- oder Zentimeterbereich erfassen zu können, ist es erforderlich, die Laufzeitmessung mit einer Genauigkeit im Pikosekundenbereich durchzuführen.

Ein möglicher Ansatz hierbei besteht darin, mit TDC(time to digital converter)-Einheiten zu arbeiten. Diese können Verzögerungsleitungen, sogenannte TDL (Tapped Delay Lines) aufweisen. Hierbei handelt es sich um digitale Verzögerungsstrukturen, mittels derer die Laufzeit eines auf den Empfänger auftreffenden Empfangspulses genau aufgelöst werden kann.

Ein derartiger Distanzsensor ist aus der DE 10 2015 103 472 A1 bekannt. Der dort beschriebene Distanzsensor umfasst einen Sender zum Aussenden mindestens eines Sendesignals, einen Empfänger zum Erzeugen eines Empfangssignals aus den in dem Überwachungsbereich remittierten Sendesignalen, einen Taktgeber zum Erzeugen eines Taktes und eine Auswertungseinheit, die dafür ausgebildet ist, die Signallaufzeit zwischen Aussenden eines Sendesignals und Empfang eines remittierten Sendesignals zu bestimmen. Die Auswertungseinheit umfasst eine Grobmesseinheit zur Bestimmung der Signallaufzeit in ganzen Takten sowie eine Feinmesseinheit mit einer Tapped Delay Line zur Bestimmung einer Restsignallaufzeit innerhalb eines Taktes. Dabei weist die Feinmesseinheit mehrere Tapped Delay Lines auf, deren gemeinsame Länge einem Takt entspricht und die mit einer unterschiedlichen Phase des Taktes angesteuert werden.

Bei diesem Distanzsensor ist das Taktsignal synchron zum Aussenden der Sendesignale. Dabei wird eine definierte, gleichbleibende Beziehung zwischen dem Start des Taktsignals und dem Aussenden des Sendesignals vorausgesetzt. Gemessen wird lediglich ein Stoppsignal, das bei Registrieren des Empfangssignals erzeugt wird. Um das Auftreffen des Empfangssignals genau zu bestimmen, werden zwei Tapped Delay Lines eingesetzt, um die Restsignallaufzeit des Empfangssignals möglichst genau zu bestimmen.

Die EP 1 876 468 A1 (D1) betrifft eine Vorrichtung zur optoelektronischen berührungslosen Distanzmessung nach dem Laufzeitprinzip mit einer Sensoreinheit mit mindestens einer Lichtquelle zum Aussenden von Lichtpulsen, mit einem Detektor zum Nachweis von Lichtpulsen, mit einer Einrichtung zum Aufteilen der Lichtpulse in jeweils einen Messpuls und einen Referenzpuls, mit einer Messoptik zum Leiten der Messpulse auf ein Objekt, dessen Entfernung zur Sensoreinheit gemessen werden soll, und zum Leiten von von dem Objekt reflektierten Messpulsen als Echopulse auf den Detektor, und mit einer Referenzoptik zum Leiten der Referenzpulse in Richtung des Detektors, wobei die Entfernung des Objekts von der Sensoreinheit bestimmbar ist aus einer Zeitdifferenz zwischen einem Startsignal und einem aus einem Echopuls abgeleiteten Echosignal. Ein optischer Weg der Referenzpulse zum Detektor ist um mindestens eine Offsetstrecke kürzer oder länger als ein optischer Weg der Messpulse zum Detektor.

Der Detektor dient zum abwechselnden quantitativen Nachweis sowohl der Echopulse als auch der Referenzpulse, wobei im Strahlengang der Echopulse ein steuerbarer Pulsabschwächer angeordnet ist zum gezielten Abschwächen der Echopulse, so dass diese mit den Referenzpulsen größenmäßig vergleichbar sind.

Die D1 wird seitens der Prüfungsabteilung zurecht als nächstliegender Stand der Technik genannt, da diese einen Distanzsensor mit einer TDC-Einheit aufweist, wobei mit dieser zur Distanzbestimmung eine Grobmessung durch Zählen von Pulsen eines Taktsignals und zwei Feinmessungen zur Bestimmung der Zeitdifferenzen zwischen Emission bzw. Empfangen eines Lichtpulses relativ zum Takt des Taktsignals durchgeführt wird.

Dennoch ist nach diesseitiger Auffassung der Gegenstand des Anspruchs 1 der vorliegenden Anmeldung durch die D1 weder vorweggenommen noch nahegelegt, da sich die erfindungsgemäßen Feinmessungen von den in D1 (Abschnitte [0069] - [0073]) beschriebenen Feinmessungen unterscheiden.

Die erste Feinmessung in D1 (Feininterpolator L7) wird mit einem Startsignal gestartet und nicht mit dem Sendepuls, wie im Anspruch 1 beschrieben. Entsprechendes gilt für die zweite Feinmessung in D1, wobei zudem in D1 nicht beschrieben ist, dass die zweite Feinmesseinheit die Grobmessung stoppt.

In CLAUDIO FAVI ET AL:" A 17ps Time-to-digital converter implemented in 65nm FPGA technology", FIELD PROGRAMMABLE GATE ARRAYS, 22. Februar 2009 (2009-02-22), Seiten 113 - 120, XP058287913 (D2) ist eine insbesondere für time-off-flight-Sensoren auswertbare Laufzeitmessung mit einem Time-to-Digital-Converter beschrieben. Für die Durchführung der Laufzeitmessungen werden Verzögerungsleitungen eingesetzt.

In CHEN HAOCHANG ET AL:" A Low Nonlinearity, Missing-Code Free Time-to-Digital Converter Based on 28-nm FPGAs With Embedded Bin-Width Calibrations", IEEE TRANSACTIONS ON INSTRUMENTATION AND MEASUREMENT, Bd. 66, Nr. 7, 1. Juli 2017 (2017-07-01), Seiten 1912-1921, XP011651875 (D3) ist ein Time-to-Digital-Converter zur Durchführung von Laufzeitmessungen beschrieben. Der Time-to-Digital-Converter umfasst eine Zelle mit mehreren Verzögerungsleitungen, für welche eine heterogene Abtastung vorgesehen ist.

Der Erfindung liegt die Aufgabe zugrunde, einen Distanzsensor und ein Verfahren bereitzustellen, mittels derer eine genaue und reproduzierbare Abstandsbestimmung von Objekten ermöglicht wird.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen Distanzsensor zur Abstandsbestimmung von Objekten in einem Überwachungsbereich, mit einem Sender und einem Empfänger, wobei vom Sender emittierte Sendepulse zu dem Objekt geführt und von diesem als Empfangspuls zum Empfänger reflektiert werden und mit einer Auswerteeinheit, in welcher aus der Laufzeit der Sendepulse zum Objekt der Abstand des Objekts zum Distanzsensor ermittelt wird. Es sind zwei unabhängig voneinander asynchron arbeitende Oszillatoren vorgesehen, wobei ein Oszillator pulsförmige, periodische Taktsignale für den Senderbetrieb generiert. Ein Oszillator bildet einen Taktgeber, der periodische Taktsignale zur Steuerung von Komponenten der Auswerteinheit generiert. Der Taktgeber erzeugt ein zu dem Sendepuls asynchrones Taktsignal. Die Auswerteeinheit umfasst wenigstens eine TDC-Einheit, wobei diese eine Grobmesseinheit und zwei Feinmesseinheiten mit jeweils einer Verzögerungsleitung aufweist. Die Grobmesseinheit ist ausgebildet, ganze Takte des Taktsignals zu zählen. Mit einem Sendepuls wird eine erste Feinmesseinheit gestartet, wobei mit dieser die Grobmesseinheit gestartet wird und das Zeitintervall zwischen Aussenden des Sendepulses und des nachfolgenden Beginns eines Taktes des Taktsignals gemessen wird. Mit dem auf den Sendepuls folgenden Empfangspuls wird die zweite Feinmesseinheit gestartet, wobei mit dieser die Grobmesseinheit gestoppt wird und das Zeitintervall zwischen Empfangen des Empfangspulses und des nachfolgenden Beginns eines Taktes des Taktsignals gemessen wird.

Die Erfindung betrifft weiterhin ein Verfahren zur Abstandsbestimmung von Objekten in einem Überwachungsbereich.

Ein wesentlicher Aspekt der Erfindung besteht darin, dass der Taktgeber ein zur Laufzeitmessung verwendetes Taktsignal generiert, das asynchron und damit unabhängig zum Sendetakt der Sendepulse ist.

Dementsprechend erfolgt erfindungsgemäß die Laufzeitmessung derart, dass sowohl der Zeitpunkt des Aussendens eines Sendepulses als auch der Zeitpunkt des Auftreffens des Empfangspulses gemessen wird.

Die Zeitpunkte können dadurch hochgenau bestimmt werden, dass mit der Grobmesseinheit die Anzahl der Takte des Taktsignals gezählt werden und zudem Feinmessungen derart durchgeführt werden, dass mit einer ersten Feinmesseinheit das Zeitintervall des Aussendens des Sendepulses bis zum Beginn der nächsten Taktsignale und mit einer zweiten Feinmesseinheit das Zeitintervall zwischen dem Empfang des Empfangspulses und des Beginns des nächsten Taktsignals bestimmt wird. Dadurch können die Zeitpunkte der Emission des

Sendepulses und des Empfangs des Empfangspulses hochgenau bestimmt werden und zwar mit zwei unabhängig voneinander arbeitenden Feinmesseinheiten.

Die Steuerung der Komponenten zur Laufzeitmessung ist reproduzierbar und einfach dadurch gegeben, dass die erste Feinmesseinheit mit Aussenden des Sendepulses die Grobmesseinheit startet und die zweite Feinmesseinheit mit Empfang des Empfangspulses die Grobmesseinheit wieder stoppt.

Die Komponenten der Laufzeitmessung bilden eine TDC(time to digital converter)-Einheit, die als integrierter Baustein herstellbar ist.

Mit einer derartigen TDC-Einheit ist eine hochpräzise Laufzeitmessung möglich. Probleme bei der Laufzeitmessung können lediglich dann auftreten, wenn ein Sendepuls oder Empfangspuls exakt am Beginn eines Taktsignals auftritt. In diesem Fall ist eine eindeutige Zuordnung des Sendepulses oder Empfangspulses zu einem Takt des Taktsignals nicht eindeutig gegeben.

Um diese Problematik zu lösen, weist die Auswerteeinheit mehrere TDC-Einheiten auf, welchen das Taktsignal mit unterschiedlichen Phasen zugeführt ist.

Dabei werden die in den TDC-Einheiten ermittelten Messergebnisse miteinander verrechnet oder verglichen.

Damit wird, wenn eine der TDC-Einheiten keine brauchbaren Messergebnisse liefert, diese nicht zur weiteren Auswertung herangezogen, wodurch Messfehler vermieden werden.

Vorteilhaft ist die oder jede TDC-Einheit auf einem FPGA implementiert.

Dadurch ergibt sich eine besonders kompakte und kostengünstig herstellbare Hardwarestruktur für die Komponenten der Laufzeitmessung.

Zur Durchführung hochgenauer Laufzeitmessungen weisen die Feinmesseinheiten der oder jeder TDC-Einheit Verzögerungsleitungen, das heißt digitale Verzögerungsstrukturen in Form von TDL (Tapped Delay Lines) auf.

Vorteilhaft weist die Verzögerungsleitung einer Feinmesseinheit eine Reihenanordnung von Verzögerungselementen auf, wobei die Laufzeit eines Sendepulses oder Empfangspulses durch Erfassung der Propagation einer Signalflanke entlang der Verzögerungselemente erfasst wird.

Dabei weisen die Verzögerungselemente binäre Signalzustände auf, wobei zur Erfassung der Signalzustände jedem Verzögerungselement ein Abtastelement zugeordnet ist.

Insbesondere besteht jedes Verzögerungselement aus einem Multiplexer, welchem ein XOR-Gatter zugeordnet ist.

Weiterhin ist zweckmäßig jedes Abtastelement von einem Flip-Flop gebildet.

Bei der Abtastung der einzelnen Verzögerungselemente mittels der Abtastelemente zu einem vorgegebenen Zeitpunkt wird ein sogenannter Thermometercode erhalten. Die Lage eines Signalpulses entsprechend einem Sendepuls oder Empfangspuls ist in Form einer Signalflanke gebildet, die eine Folge von Bits von Signalwerten 0 von einer Folge von Bits mit Signalwerten 1 trennt.

Gemäß einer ersten Variante ist mittels der Abtastelemente eine homogene Abtastung derart durchgeführt, dass jedes Abtastelement den Signalzustand an demselben Bauelement eines Verzögerungselements abgreift.

In diesem Fall kann eine Verfälschung der abgetasteten Signalfolge durch unvermeidliche Toleranzen der Hardware der aus Halbleiterbauelementen bestehendem Verzögerungselemente auftreten. Durch derartige Toleranzen können die Hardware-Verbindungen zwischen zwei Verzögerungselementen verkürzt sein, so dass ein Verzögerungselement immer, und damit die abgetastete Signalfolge verfälschend immer den Signalwert 0 oder immer den Signalwert 1 liefert.

Um derartige Verfälschungen prinzipiell auszuschließen, wird gemäß einer zweiten Variante mittels der Abtastelemente eine heterogene Abtastung derart durchgeführt, dass in einer alternierenden Folge ein erstes Abtastelement den Signalzustand an einem ersten Bauelement eines Verzögerungselements und ein zweites Abtastelement den Signalzustand an einem zweiten Bauelement abgreift.

Zur weiteren Erhöhung der Messgenauigkeit weist vorteilhaft jede Feinmesseinheit eine Korrektureinheit zur Elimination von Bubble Errors auf.

Derartige Bubble Errors sind einzelne verfälschte Bits in der bei einer Abtastung der Verzögerungselemente erhaltenen, als Thermometercode vorliegenden Signalfolge. Diese verfälschten Bits werden mit der Bubble Error Einheit korrigiert.

Die so gebildete Korrektureinheit weist vorteilhaft eine Doppelfunktion derart auf, dass mittels der Korrektureinheit eine auf der Verzögerungsleitung vorhandene Signalfolge in Form eines Thermometercodes in einem One-Hot-Code durchgeführt ist.

Vorteilhaft weist die TDC-Einheit eine Rechnereinheit auf, in welcher mit der Grobmesseinheit und den Verzögerungselementen generierte Ausgangssignale verarbeitet werden.

Um die bei den Abtastungen der Verzögerungselemente der Verzögerungsleitungen erhaltenen Signalfolgen in der Rechnereinheit einfach auswerten zu können, ist der Korrektureinheit eine Konvertereinheit nachgeordnet, in welcher eine Wandlung des One-Hot-Codes in eine Dualzahlendarstellung gewandelt ist.

Die Messgenauigkeit der oder jeder TDC-Einheit wird besonders vorteilhaft dadurch erhöht, dass jede Feinmesseinheit eine Kalibriereinheit aufweist.

Die Funktionsweise ist derart, dass mittels der Kalibriereinheit Messungenauigkeiten aufgrund unterschiedlicher Verzögerungszeiten der Verzögerungselemente der Verzögerungsleitungen kompensiert sind.

Da der Sender asynchron zum Taktgeber für die oder jede TDC-Einheit betrieben wird, ist es möglich, mit der Kalibriereinheit eine statistische Kalibrierung durchzuführen.

Bei dieser statistischen Kalibrierung wird für die Verzögerungselemente einer Verzögerungsleitung ein Histogramm ermittelt derart, dass bei einer großen Anzahl von Messungen mit Sendepulsen die Häufigkeit ermittelt wird, bis zu welchem Verzögerungselement der einem Sendepuls oder Empfangspuls entsprechende Signalpuls auf die Verzögerungsleitung gelangt ist. Da der Sendezeitpunkt des Sendepulses asynchron zum Takt des Taktgenerators und damit asynchron zu den Zeitmessungen in der jeweiligen Verzögerungsleitung ist, wird bei einer idealen Verzögerungsleitung für alle Verzögerungselemente dieselbe Häufigkeit erwartet. Aufgrund von Bauteiltoleranzen der Verzögerungselemente ergibt sich im aufgenommenen Histogramm keine Gleichverteilung für die Verzögerungselemente. Aus diesem Histogramm können in der Kalibriereinheit Korrekturtabellen erstellt werden, mit denen die toleranzbedingten Unterschiede der Verzögerungselemente kompensiert werden können.

Der erfindungsgemäße Distanzsensor kann vorteilhaft als optischer Sensor ausgebildet sein, dessen Sender Sendelichtstrahlen emittiert.

Alternativ kann der Distanzsensor auch Funkstrahlung, Radarstrahlung oder Ultraschallwellen emittieren.

Gemäß einer ersten Variante emittiert der Sender des Distanzsensors Sendepulse in einer feststehenden Richtung.

Alternativ kann der Distanzsensor auch als Scanner ausgebildet sein. In diesem Fall werden die Sendepulse periodisch in einem flächigen oder räumlichen Abtastbereich geführt. Hierzu kann dem Sender eine Ablenkeinheit wie zum Beispiel ein motorisch getriebener Umlenkspiegel zugeordnet sein, der die Sendepulse umlenkt, so dass diese innerhalb des Abtastbereiches geführt sind. Alternativ kann der Sender mit dem Empfänger in einem rotierenden Messkopf angeordnet sein.

Prinzipiell kann der Distanzsensor auch dahingehend erweitert sein, dass dieser mehrere Sender und/oder Empfänger aufweist.

Die Erfindung wird im Folgenden anhand der Zeichnungen erläutert. Es zeigen:
- Figur 1: Ausführungsbeispiel des erfindungsgemäßen Distanzsensors.
- Figur 2: Darstellung einer TDC-Einheit des Distanzsensors gemäß Figur 1.
- Figur 3: Darstellung einer Feinmesseinheit der TDC-Einheit gemäß Figur 2 mit homogener Abtastung einer Verzögerungsleitung.
- Figur 4: Darstellung einer Feinmesseinheit der TDC-Einheit gemäß Figur 2 mit heterogener Abtastung einer Verzögerungsleitung.
- Figur 5: Zeitdiagramm zur Veranschaulichung des Messprinzips des Distanzsensors gemäß Figur 1.
- Figur 6 a): Darstellung eines in einer Feinmesseinheit generierten Thermometercodes mit einem fehlerhaften Bit.

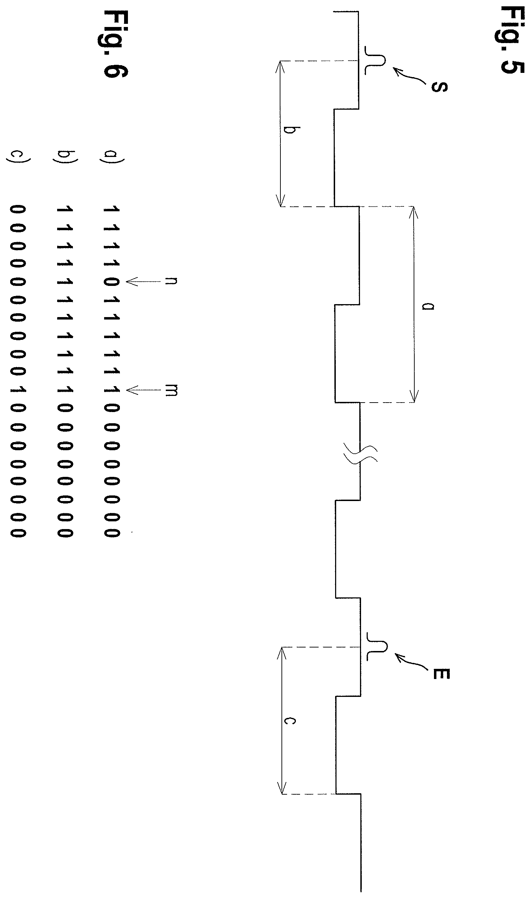

- Figur 6 b): Thermometercode gemäß Figur 6 a) nach Korrektur mit einer Korrektureinheit.
- Figur 6 c): Aus dem Thermometercode gemäß Figur 6 b) erzeugter One-Hot-Code.

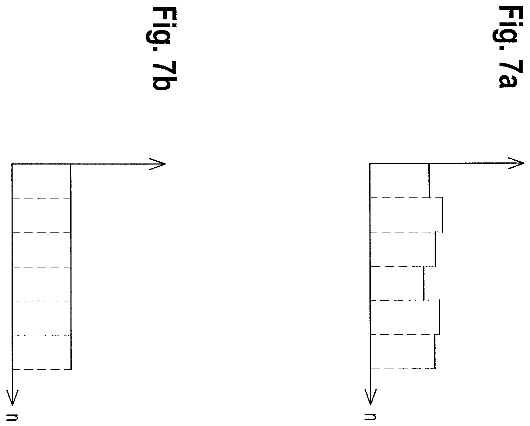

- Figur 7: Histogramm für 6 Verzögerungselemente einer Verzögerungsleitung einer Feinmesseinheit a) realer Fall b) idealer Fall

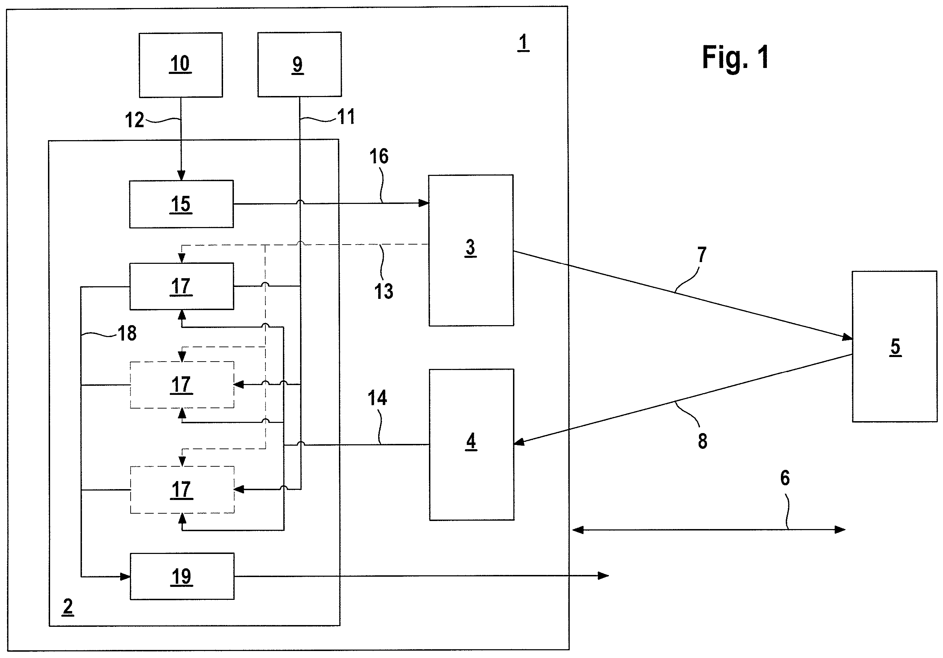

Figur 1 zeigt schematisch den Aufbau eines Ausführungsbeispiels des erfindungsgemäßen Distanzsensors 1, der im vorliegenden Fall als optischer Sensor ausgebildet ist.

Der Distanzsensor 1 weist einen FPGA 2 auf, auf welchem die Komponenten einer Auswerteeinheit integriert sind. Weiterhin sind ein Sender 3 und ein Empfänger 4 vorgesehen. Zur Detektion von Objekten 5 in einem Überwachungsbereich emittiert der Sender 3 Sendelichtstrahlen 7 in Form von Sendepulsen. Diese werden vom Objekt 5 als Empfangslichtstrahlen 8 in Form von Empfangspulsen zurück zum Empfänger 4 reflektiert.

Dem FPGA 2 sind zwei Oszillatoren 9, 10 zugeordnet die unabhängig voneinander, das heißt asynchron arbeiten. Generell können die Oszillatoren 9, 10 auch auf dem FPGA 2 implementiert sein. Ein Oszillator 9 bildet einen Taktgeber, der periodische Taktsignale 11 zur Steuerung von Komponenten der Auswerteeinheit generiert. Ein Oszillator 10 generiert pulsförmige, periodische Taktsignale 12 für den Senderbetrieb.

Wie Figur 1 zeigt, werden Sendesignale 13 des Senders 3 und Empfangssignale 14 des Empfängers 4 in die Auswerteeinheit eingelesen.

Mit den Taktsignalen 12 des Oszillators 10 wird eine Pulserzeugungseinheit 15 angesteuert. Diese generiert Ansteuerimpulse 16, mit denen der Sender 3 so angesteuert wird, dass dieser eine Folge von Sendepulsen emittiert, die jedoch einzeln ausgewertet werden.

Mit dem Distanzsensor 1 gemäß Figur 1 erfolgt eine Distanzmessung nach einem Puls-Laufzeit-Verfahren. Zur Ermittlung des Abstands des Objekts 5 emittiert der Sender 3 Sendepulse die vom Objekt 5 als Empfangspulse zum Empfänger 4 zurückreflektiert werden. In der Auswerteeinheit wird die Laufzeit 6 der Sendepulse zum Objekt 5 und zurück zum Empfänger 4 bestimmt und daraus der Abstand des Objekts 5 zum Distanzsensor 1 berechnet.

Zur Laufzeitbestimmung der Sendepulse sind bei der Ausführungsform gemäß Figur 1 drei identische TDC-Einheiten 17, das heißt time to digital converter, vorgesehen. Generell kann auch eine andere Anzahl von TDC-Einheiten 17 vorgesehen sein, wobei insbesondere auch nur eine TDC-Einheit 17 vorgesehen sein kann.

Den einzelnen TDC-Einheiten 17 werden die Taktsignale 11 des Oszillators 9 mit unterschiedlichen Phasenlagen zugeführt. Die Ergebnisse der Laufzeitmessungen werden von den einzelnen TDC-Einheiten 17 als Ausgabesignale 18 an eine Zentraleinheit 19 weitergegeben, in der die Ausgabesignale 18 gemeinsam ausgewertet werden, um ein Abstandssignal zu generieren, das von dem Distanzsensor 1 ausgegeben wird.

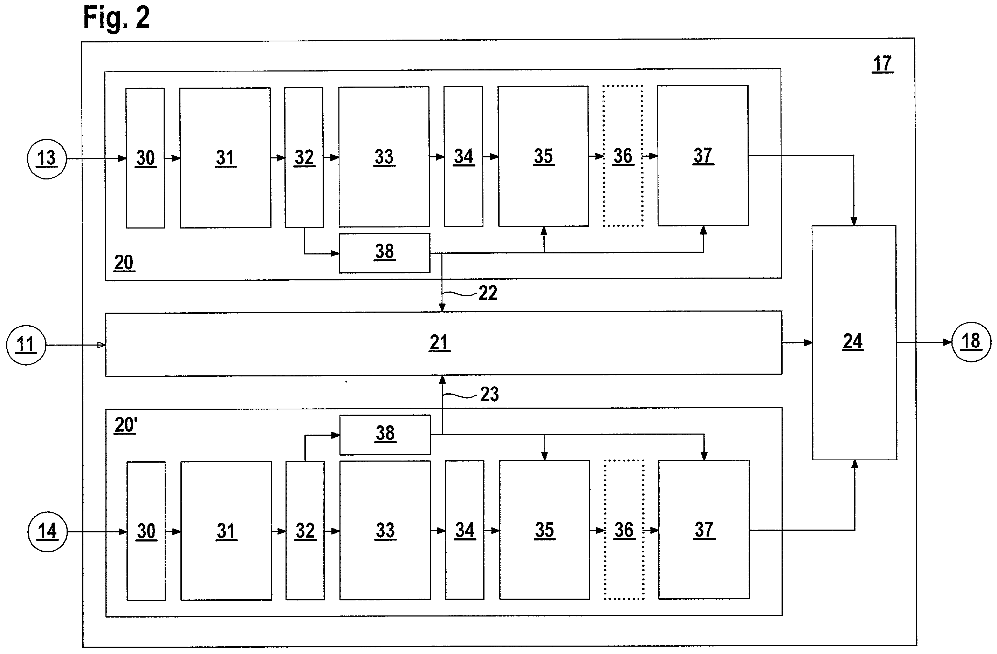

Figur 2 zeigt den Aufbau einer TDC-Einheit 17 des Distanzsensors 1 gemäß Figur 1. Die TDC-Einheit 17 weist eine erste Feinmesseinheit 20 auf, welcher die Sendesignale 13 zugeführt sind. Weiterhin ist eine zweite Feinmesseinheit 20' vorgesehen, welcher das Empfangssignal 14 des Empfängers 4 zugeführt wird. Weiterhin ist eine Grobmesseinheit 21 vorgesehen, welche ausgebildet ist, die Taktsignale 11 des Oszillators 9, das heißt des Taktgebers, zu zählen.

In den Feinmesseinheiten 20, 20' generierte Erkennungssignale 22, 23 werden der Grobmesseinheit 21 zugeführt. Die in den Feinmesseinheiten 20, 20' und der Grobmesseinheit 21 generierten Ausgangssignale werden einer Rechnereinheit 24 zugeführt, in welcher abhängig von den Ausgangssignalen das Ausgabesignal 18 generiert wird.

Die Feinmesseinheiten 20, 20' weisen einen identischen Aufbau auf. Jede Feinmesseinheit 20, 20' weist einen Eingangsfilter 30 auf. Der Eingangsfilter 30 filtert, falls der Sender 3 Mehrfachpulse emittiert, aus diesen jeweils einen Sendepuls aus. Dasselbe gilt für die Empfangspulse.

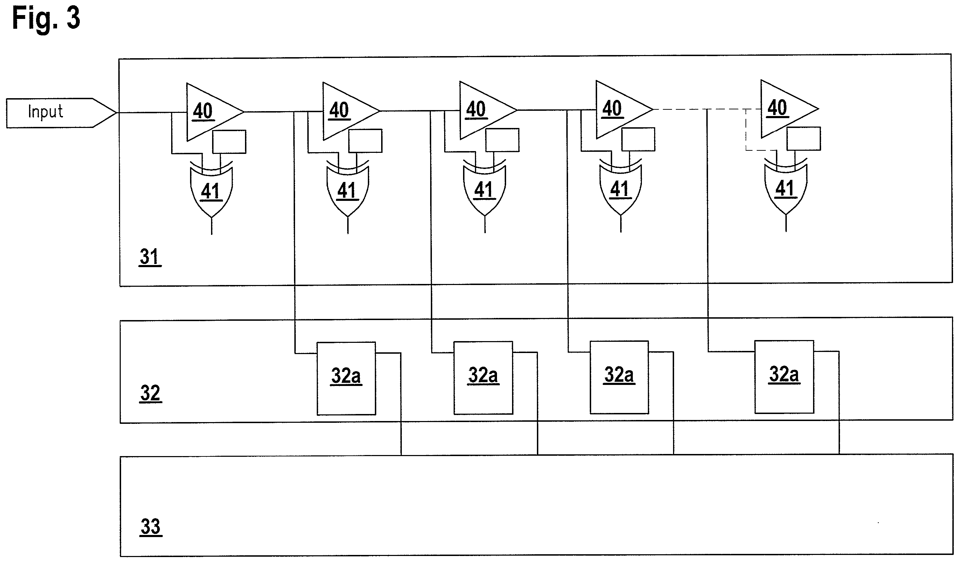

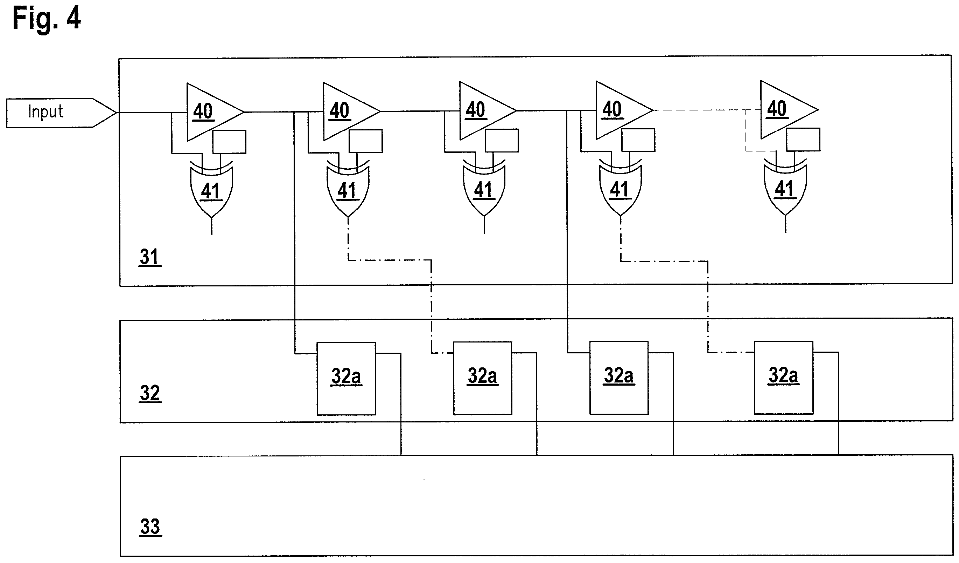

Dem Eingangsfilter 30 ist eine Verzögerungsleitung 31 nachgeordnet. Deren Aufbau ist in den Figuren 3 und 4 detaillierter dargestellt. Diese bildet eine Tapped-Delay-Line, das heißt digitale Verzögerungsstrukturen für eine hochgenaue Laufzeitmessung. Der Verzögerungsleitung 31 ist eine erste Registerstufe 32 nachgeordnet, auf welche eine Korrektureinheit 33 zur Elimination von Bubble Errors folgt. An diese schließt eine zweite Registerstufe 34 an, auf welcher eine Konvertereinheit 35 folgt, die ausgebildet ist, einen Thermometercode in einen One-Hot-Code zu wandeln. Darauf folgt eine weitere Registerstufe 36 und eine Kalibriereinheit 37. Schließlich ist eine Einheit 38 zur Erkennung gültiger Messungen vorgesehen, die mit der ersten Registerstufe 32 der Konvertereinheit 35 und der Kalibriereinheit 37 verbunden ist.

Das Messprinzip der mit der TDC-Einheit 17 gemäß Figur 1 durchgeführten Laufzeit 6 ist in Figur 5 veranschaulicht. In Figur 5 ist das Taktsignal 11 des den Taktgeber ausbildenden Oszillators 9 dargestellt. Das Taktsignal 11 besteht aus einer periodischen Folge von Takten a. Wird vom Sender 3 ein Sendepuls emittiert, so wird das dem Sendepuls entsprechende Sendesignal 13 in Form eines Signalpulses (in Figur 5 mit S bezeichnet) der ersten Feinmesseinheit 20 zugeführt. Die Feinmesseinheit 20 startet darauf die Grobmesseinheit 21 mit dem Erkennungssignal 22, worauf die Grobmesseinheit 21 die Takte a des Taktsignals 11 zählt. Die Feinmesseinheit 20 erfasst durch die Propagation des Signalpulses S in der Verzögerungsleitung 31 die Laufzeit 6 vom Auftreten des Signalpulses bis zum Beginn des nächsten Taktes.

Sobald am Empfänger 4 der vom Objekt 5 reflektierte Sendepuls als Empfangspuls zum Empfänger 4 gelangt, wird entsprechend des Empfangspulses als Empfangssignal 14 der Signalpuls E der zweiten Feinmesseinheit 20' zugeführt. Daraufhin stoppt die Feinmesseinheit 20' mit dem Erkennungssignal 23 die Grobmesseinheit 21. Parallel misst die Feinmesseinheit 20' mit der Verzögerungsleitung 31 das Zeitintervall c zwischen Auftreten des Empfangspulses und Beginn des nächsten Takts des Taktsignals.

Die mit den Feinmesseinheiten 20, 20' gemessenen Laufzeiten b und c sowie der Zählstand der Grobmesseinheit 21 werden als Ausgangssignale der Rechnereinheit 24 zugeführt. Dort wird aus diesen Messgrößen die Laufzeit 6 zwischen dem Sendepuls und Empfangspuls berechnet und als Ausgabesignal 18 der Zentraleinheit 19 zugeführt.

Eine derartige Laufzeitmessung ist nur dann nicht eindeutig möglich, wenn der Sendepuls oder Empfangspuls, das heißt einer der Signalpulse, mit dem Beginn eines Takts a zusammenfällt.

Um derartige Probleme zu vermeiden, weist die Auswerteeinheit des Distanzsensors 1 drei TDC-Einheiten 17 auf, denen das Taktsignal 11 mit unterschiedlichen Phasen zugeführt ist. Fällt bei der Laufzeitmessung in einer der TDC-Einheiten 17 der Sendepuls oder Empfangspuls mit dem Beginn eines Takts a zusammen, so ist dies bei den beiden anderen TDC-Einheiten 17 definitiv nicht der Fall, so dass diese korrekte Laufzeitwerte liefern.

Durch eine gemeinsame Auswertung der Ausgabesignale 18 der TDC-Einheiten 17, beispielsweise durch eine Mehrheitsentscheidung, wird in der Zentraleinheit 19 der korrekte Laufzeitwert ermittelt, der dann in einen Abstandswert umgerechnet und als Ausgangssignal des Distanzsensors 1 ausgegeben wird.

Figur 3 zeigt eine erste Ausführungsform einer Verzögerungsleitung 31 mit einer zugeordneten Registerstufe 32 und einer Korrektureinheit 33.

Die Verzögerungsleitung 31 besteht aus einer Reihenanordnung von Verzögerungselementen 40 in Form von Multiplexer oder dergleichen. An jedes Verzögerungselement 40 ist ein XOR-Gatter 41 angeschlossen.

Die Registerstufe 32 dient zur Abtastung der aktuellen Signalzustände der Verzögerungselemente 40. Hierzu weist die Registerstufe 32 eine Reihenanordnung von Flip-Flops als Abtastelemente 32a auf. Die Ausgänge der als D-Flip-Flops ausgebildeten Flip-Flops sind der Korrektureinheit 33 zugeführt.

Die Verzögerungselemente 40 weisen an ihren Ausgängen binäre Signalverbände 0 und 1 auf, die mit den Abtastelementen 32a zeitgleich zu einem Abtastzeitpunkt abgetastet werden.

Bei der Ausführungsform gemäß Figur 3 erfolgt eine homogene Abtastung derart, dass alle Flip-Flops den Signalwert am Ausgang des Verzögerungselements 40 abtasten.

Die Ausführungsform gemäß Figur 4 ist bezüglich der Ausführungsform gemäß Figur 3 dahingehend abgewandelt, dass eine heterogene Abtastung erfolgt. Bei dieser heterogenen Abtastung tasten erste Flip-Flops das Signal am Ausgang des Verzögerungselements 40 und zweite Flip-Flops das Signal am XOR-Gatter 41 ab.

Da bei der homogenen Abtastung gemäß Figur 3 alle Flip-Flops die Signale am Ausgang des jeweiligen Verzögerungselements 40 abtasten, reicht in diesem Fall eine einfache Ausführung der Korrektureinheit 33 aus.

Da bei der heterogenen Abtastung gemäß Figur 4 eine alternierende Folge von Flip-Flops vorgesehen ist, bei welcher erste Flip-Flops die Ausgänge der Verzögerungselemente 40 abtasten und zweite Flip-Flops die XOR-Gatter 41 abtasten, sind in diesem Fall erste Registerstufe 32 und die Korrektureinheit 33 doppelt ausgeführt.

Durch diese Abtastung wird ein Thermometercode, wie in Figur 6 dargestellt, erhalten. Der Signalpuls entspricht einer Signalflanke, das heißt einem Übergang von Signalen mit dem Signalwert 1 auf Signale mit Signalwerten 0.

Diese Signalflanke wandert entsprechend der Verzögerungszeiten der Verzögerungsleitung 31 entlang der einzelnen Verzögerungselemente 40. Im vorliegenden Fall ist die dem Signalpuls entsprechende Signalflanke bei dem m-ten Verzögerungselement 40 angekommen. Mit der Abtastung wird das Zeitintervall c zwischen Abtasten eines Signalpulses S oder E bis zum Beginn des nächsten Takts a (siehe Figur 5) dadurch gemessen, indem erfasst wird, wie weit die Signalflanke in der Verzögerungsleitung 31 propagiert.

Wie aus Figur 6 a) ersichtlich, ist am n-ten Verzögerungselement 40 ein Bubble-Error enthalten, da dort fälschlicherweise der Signalwert 0 vorliegt.

Dieser Bubble-Error wird in der Korrektureinheit 33 eliminiert, so dass der fehlerfreie Thermometercode gemäß Figur 6 b) erhalten wird.

In der Korrektureinheit 33 wird weiterhin der Thermometercode (Figur 6 b) in einen One-Hot-Code (Figur 6 c) gewandelt.

Schließlich wird in der Konvertereinheit 35 der One-Hot-Code in eine Dualzahlendarstellung gewandelt, die als Ausgangssignal der Rechnereinheit 24 zugeführt wird.

Bei der Anordnung gemäß Figur 3 können bei der homogenen Abtastung Fehler auftreten, die durch bauteilbedingte Toleranzen verursacht sind. Dabei kann beispielsweise ein Verzögerungselement 40 fehlerhaft immer denselben Signalzustand aufweisen. Bei einer homogenen Abtastung könnte dies zu Fehlern in der Laufzeitbestimmung führen. Diese Fehlerquelle wird durch die Ausführungsform gemäß Figur 4, bei welcher eine inhomogene Abtastung erfolgt, weitgehend beseitigt.

Durch toleranzbedingte Bauteilschwankungen arbeiten weiterhin die einzelnen Verzögerungselemente 40 der Verzögerungsleitung 31 einer TDC-Einheit 17 nicht völlig identisch, was auch zu Fehlern in der Laufzeitbestimmung führt.

Zur Beseitigung dieser Fehlerquelle ist die Kalibriereinheit 37 vorgesehen, in welcher eine statistische Kalibrierung durchgeführt wird.

Hierzu wird eine Kalibriermessung durchgeführt, in der über eine Vielzahl von Abstandsmessungen ermittelt wird, bis zu welchem Verzögerungselement 40 der Verzögerungselemente 40 der einzelne Signalpuls gekommen ist. Das so aufgenommene Histogramm zeigt Figur 7 a), während Figur 7 b) den idealen Fall zeigt. Da die Sendepulse und Empfangspulse völlig asynchron zum Taktsignal 11 auftreten, ist die Lage des Sendepulses oder Empfangspulses relativ zum Takt a völlig zufällig. Daher wird bei einer Vielzahl von Abstandsmessungen für ideale Verzögerungselemente 40 der Verzögerungsleitung 31 ein Histogramm wie in Figur 7 b) dargestellt erwartet, das heißt für alle Verzögerungselemente 40 wird die gleiche Häufigkeit erwartet, dass dort der dem Sendepuls oder Empfangspuls entsprechende Signalpuls registriert wird.

Tatsächlich wird jedoch keine Gleichverteilung erhalten, wie in Figur 7 a) veranschaulicht, da die Verzögerungselemente 40 der Verzögerungsleitung 31 nicht völlig identisch sind.

Das reale, gemessene Histogramm gemäß Figur 7 a) wird daher bei einer Kalibrierung der Berechnung von Korrekturfaktoren für die einzelnen Verzögerungselemente 40 verwendet.

Zur weiteren Reduzierung von Messfehlern dient die in Figur 2 dargestellte Einheit 38 zur Erkennung gültiger Messungen. In dieser Einheit 38 wird geprüft, ob die in der ersten Registerstufe 32 durch Abtastung erhaltene Signalfolge einer erwarteten Propagation einer einem Sendepuls oder Empfangspuls entsprechenden Signalflanke entspricht.

### Bezugszeichenliste

- (1): Distanzsensor
- (2): FPGA
- (3): Sender
- (4): Empfänger
- (5): Objekt
- (6): Laufzeit
- (7): Sendelichtstrahlen
- (8): Empfangslichtstrahlen
- (9): Oszillator
- (10): Oszillator
- (11): Taktsignal
- (12): Taktsignal
- (13): Sendesignal
- (14): Empfangssignal
- (15): Pulserzeugungseinheit
- (16): Ansteuerimpuls
- (17): TDC-Einheit
- (18): Ausgabesignal
- (19): Zentraleinheit
- (20): Feinmesseinheit
- (20'): Feinmesseinheit
- (21): Grobmesseinheit
- (22): Erkennungssignal
- (23): Erkennungssignal
- (24): Rechnereinheit
- (30): Eingangsfilter
- (31): Verzögerungsleitung
- (32): erste Registerstufe
- (32a): Abtastelement
- (33): Korrektureinheit
- (34): zweite Registerstufe
- (35): Konvertereinheit
- (36): weitere Registerstufe
- (37): Kalibriereinheit
- (38): Einheit
- (40): Verzögerungselement
- (41): XOR-Gatter
- (a): Takt
- (b): Laufzeit
- (c): Zeitintervall
- (E): Signalpuls
- (S): Signalpuls

## Patentansprüche

1. Distanzsensor (1) zur Abstandsbestimmung von Objekten (5) in einem Überwachungsbereich, mit einem Sender (3) und einem Empfänger (4), wobei vom Sender (3) emittierte Sendepulse zu dem Objekt (5) geführt und von diesem als Empfangspuls zum Empfänger (4) reflektiert werden und mit einer Auswerteeinheit, in welcher aus der Laufzeit (6) der Sendepulse zum Objekt (5) der Abstand des Objekts (5) zum Distanzsensor (1) ermittelt wird, wobei zwei unabhängig voneinander asynchron arbeitende Oszillatoren (9, 10) vorgesehen sind, wobei ein Oszillator (10) pulsförmige, periodische Taktsignale (12) für den Senderbetrieb generiert und ein Oszillator (9) einen Taktgeber bildet, der periodische Taktsignale (11) zur Steuerung von Komponenten der Auswerteinheit generiert, wobei der Taktgeber ein zu dem Sendepuls asynchrones Taktsignal (11) erzeugt, dass die Auswerteeinheit wenigstens eine TDC-Einheit (17) umfasst, wobei diese eine Grobmesseinheit (21) und zwei Feinmesseinheiten (20, 20') mit jeweils einer Verzögerungsleitung (31) aufweist, wobei die Grobmesseinheit (21) ausgebildet ist, ganze Takte (a) des Taktsignals (11) zu zählen, dass mit einem Sendepuls eine erste Feinmesseinheit (20) gestartet wird, wobei mit dieser die Grobmesseinheit (21) gestartet wird und das Zeitintervall (c) zwischen Aussenden des Sendepulses und des nachfolgenden Beginns eines Taktes (a) des Taktsignals (11) gemessen wird, dass mit dem auf den Sendepuls folgenden Empfangspuls die zweite Feinmesseinheit (20') gestartet wird, wobei mit dieser die Grobmesseinheit (21) gestoppt wird und das Zeitintervall (c) zwischen Empfangen des Empfangspulses und des nachfolgenden Beginns eines Taktes (a) des Taktsignals (11) gemessen wird.

2. Distanzsensor (1) nach Anspruch 1, **dadurch gekennzeichnet, dass** die Verzögerungsleitung (31) einer Feinmesseinheit (20, 20') eine Reihenanordnung von Verzögerungselementen (40) aufweist, wobei die Laufzeit (6) eines Sendepulses oder Empfangspulses durch Erfassung der Propagation einer Signalflanke entlang der Verzögerungselemente (40) erfasst wird.

3. Distanzsensor (1) nach Anspruch 2, **dadurch gekennzeichnet, dass** die Verzögerungselemente (40) binäre Signalzustände aufweisen, wobei zur Erfassung der Signalzustände jedem Verzögerungselement (40) ein Abtastelement (32a) zugeordnet ist.

4. Distanzsensor (1) nach Anspruch 3, **dadurch gekennzeichnet, dass** mittels der Abtastelemente (32a) eine homogene Abtastung derart durchgeführt ist, dass jedes Abtastelement (32a) den Signalzustand an demselben Bauelement eines Verzögerungselements (40) abgreift.

5. Distanzsensor (1) nach Anspruch 3, **dadurch gekennzeichnet, dass** mittels der Abtastelemente (32a) eine heterogene Abtastung derart durchgeführt wird, dass in einer alternierenden Folge ein erstes Abtastelement (32a) den Signalzustand an einem ersten Bauelement eines Verzögerungselements (40) und ein zweites Abtastelement (32a) den Signalzustand an einem zweiten Bauelement abgreift.

6. Distanzsensor (1) nach einem der Ansprüche 2 bis 5, **dadurch gekennzeichnet, dass** jedes Verzögerungselement (40) aus einem Multiplexer besteht, welchem ein XOR-Gatter (41) zugeordnet ist.

7. Distanzsensor (1) nach Anspruch 3, **dadurch gekennzeichnet, dass** jedes Abtastelement (32a) von einem Flip-Flop gebildet ist.

8. Distanzsensor (1) nach einem der Ansprüche 1 bis 7, **dadurch gekennzeichnet, dass** jede Feinmesseinheit (20, 20') eine Korrektureinheit (33) zur Elimination von Bubble Errors aufweist.

9. Distanzsensor (1) nach Anspruch 8, **dadurch gekennzeichnet, dass** mittels der Korrektureinheit (33) eine auf der Verzögerungsleitung (31) vorhandene Signalfolge in Form eines Thermometercodes in einem One-Hot-Code durchgeführt ist.

10. Distanzsensor (1) nach Anspruch 9, **dadurch gekennzeichnet, dass** der Korrektureinheit (33) eine Konvertereinheit (35) nachgeordnet ist, in welcher eine Wandlung des One-Hot-Codes in eine Dualzahlendarstellung gewandelt ist.

11. Distanzsensor (1) nach einem der Ansprüche 1 bis 10, **dadurch gekennzeichnet, dass** jede Feinmesseinheit (20, 20') eine Kalibriereinheit (37) aufweist.

12. Distanzsensor (1) nach Anspruch 11, **dadurch gekennzeichnet, dass** mittels der Kalibriereinheit (37) Messungenauigkeiten aufgrund unterschiedlicher Verzögerungszeiten der Verzögerungselemente (40) der Verzögerungsleitungen (31) kompensiert sind.

13. Distanzsensor (1) nach einem der Ansprüche 11 oder 12, **dadurch gekennzeichnet, dass** mittels der Kalibriereinheit (37) eine statistische Kalibrierung durchgeführt ist.

14. Distanzsensor (1) nach einem der Ansprüche 1 bis 13, **dadurch gekennzeichnet, dass** die TDC-Einheit (17) eine Rechnereinheit (24) aufweist, in welcher mit der Grobmesseinheit (21) und den Verzögerungselementen (40) generierte Ausgangssignale verarbeitet werden.

15. Distanzsensor (1) nach einem der Ansprüche 1 bis 14, **dadurch gekennzeichnet, dass** die Auswerteeinheit mehrere TDC-Einheiten (17) aufweist, welchen das Taktsignal (11) mit unterschiedlichen Phasen zugeführt ist.

16. Distanzsensor (1) nach Anspruch 15, **dadurch gekennzeichnet, dass** die in den TDC-Einheiten (17) ermittelten Messergebnisse miteinander verrechnet oder verglichen werden.

17. Distanzsensor (1) nach einem der Ansprüche 1 bis 16, **dadurch gekennzeichnet, dass** die oder jede TDC-Einheit (17) auf einem FPGA (2) implementiert ist.

18. Distanzsensor (1) nach einem der Ansprüche 1 bis 17, **dadurch gekennzeichnet, dass** dieser ein optischer Sensor ist, dessen Sender (3) Sendelichtstrahlen (7) emittiert.

19. Distanzsensor (1) nach einem der Ansprüche 1 bis 17, **dadurch gekennzeichnet, dass** dessen Sender (3) Funkstrahlung, Radarstrahlung oder Ultraschallwellen emittiert.

20. Distanzsensor (1) nach einem der Ansprüche 1 bis 19, **dadurch gekennzeichnet, dass** dieser als Scanner ausgebildet ist.

21. Verfahren zur Abstandsbestimmung von Objekten (5) in einem Überwachungsbereich mittels eines Distanzsensors (1) mit einem Sender (3) und einem Empfänger (4), wobei vom Sender (3) emittierte Sendepulse zu dem Objekt (5) geführt und von diesem als Empfangspulse zum Empfänger (4) geführt sind, und mit einer Auswerteeinheit, in welcher aus der Laufzeit (6) der Sendepulse zum Objekt (5) der Abstand des Objekts (5) zum Distanzsensor (1) ermittelt wird, wobei zwei unabhängig voneinander asynchron arbeitende Oszillatoren (9, 10) vorgesehen sind, wobei ein Oszillator (10) pulsförmige, periodische Taktsignale (12) für den Senderbetrieb generiert und ein Oszillator (9) einen Taktgeber bildet, der periodische Taktsignale (11) zur Steuerung von Komponenten der Auswerteinheit generiert, wobei der ein zu den Sendepulsen asynchrones Taktsignal (11) erzeugt, dass die Auswerteeinheit wenigstens eine TDC-Einheit (17) umfasst, wobei diese eine Grobmesseinheit (21) und zwei Feinmesseinheiten (20, 20') mit jeweils einer Verzögerungsleitung (31) aufweist, wobei die Grobmesseinheit (21) ausgebildet ist, ganze Takte (a) des Taktsignals (11) zu zählen, dass mit einem Sendepuls eine erste Feinmesseinheit (20) gestartet wird, wobei mit dieser die Grobmesseinheit (21) gestartet wird und das Zeitintervall (c) zwischen Aussenden des Sendepulses und des nachfolgenden Beginns eines Taktes (a) des Taktsignals (11) gemessen wird, dass mit dem auf den Sendepuls folgenden Empfangspuls die zweite Feinmesseinheit (20') gestartet wird, wobei mit dieser die Grobmesseinheit (21) gestoppt wird und das Zeitintervall (c) zwischen Empfangen des Empfangspulses und des nachfolgenden Beginns eines Taktes (a) des Taktsignals (11) gemessen wird.

## Claims

1. Distance sensor (1) for determining the distance of objects (5) in a monitoring area, having a transmitter (3) and a receiver (4), wherein transmission pulses emitted by the transmitter (3) are guided to the object (5) and reflected by the latter as a reception pulse to the receiver (4), and having an evaluation unit in which the distance of the object (5) to the distance sensor (1) is determined from the transit time (6) of the transmission pulses to the object (5),
wherein two independently asynchronously operating oscillators (9, 10) are provided, one oscillator (10) generating pulse-shaped, periodic clock signals (12) for transmitter operation and one oscillator (9) forming a clock generator which generates periodic clock signals (11) for controlling components of the evaluation unit, wherein the clock generator generates a clock signal (11) which is asynchronous to the transmission pulse, in that the evaluation unit comprises at least one TDC unit (17), wherein this has a coarse measuring unit (21) and two fine measuring units (20, 20'), each with a delay line (31), wherein the coarse measuring unit (21) is constructed as follows counting whole clock pulses (a) of the clock signal (11), in that a first fine measuring unit (20) is started with a transmission pulse, the coarse measuring unit (21) being started with this and the time interval (c) between transmission of the transmission pulse and the subsequent start of a clock pulse (a) of the clock signal (11) being measured, in that the second fine measuring unit (20') is started with the receive pulse following the transmit pulse, the coarse measuring unit (21) being stopped with this and the time interval (c) between receiving the receive pulse and the subsequent start of a clock pulse (a) of the clock signal (11) being measured.

2. Distance sensor (1) according to claim 1, **characterised in that** the delay line (31) of a fine measuring unit (20, 20') has a series arrangement of delay elements (40), wherein the propagation time (6) of a transmit pulse or receive pulse is detected by detecting the propagation of a signal edge along the delay elements (40).

3. Distance sensor (1) according to claim 2, **characterised in that** the delay elements (40) have binary signal states, wherein a sensing element (32a) is assigned to each delay element (40) to detect the signal states.

4. Distance sensor (1) according to claim 3, **characterised in that** homogeneous sensing is carried out by means of the sensing elements (32a) in such a way that each sensing element (32a) taps the signal state at the same component of a delay element (40).

5. Distance sensor (1) according to claim 3, **characterised in that** heterogeneous sensing is carried out by means of the sensing elements (32a) in such a way that, in an alternating sequence, a first sensing element (32a) taps the signal state at a first component of a delay element (40) and a second sensing element (32a) taps the signal state at a second component.

6. Distance sensor (1) according to one of claims 2 to 5, **characterised in that** each delay element (40) consists of a multiplexer with which an XOR gate (41) is associated.

7. Distance sensor (1) according to claim 3, **characterised in that** each sensing element (32a) is formed by a flip-flop.

8. Distance sensor (1) according to one of claims 1 to 7, **characterised in that** each fine measuring unit (20, 20') has a correction unit (33) for eliminating bubble errors.

9. Distance sensor (1) according to claim 8, **characterised in that** a signal sequence present on the delay line (31) in the form of a thermometer code is carried out in a one-hot code by means of the correction unit (33).

10. Distance sensor (1) according to claim 9, **characterised in that** a converter unit (35) is arranged downstream of the correction unit (33), in which a conversion of the one-hot code is converted into a dual-number representation.

11. Distance sensor (1) according to one of claims 1 to 10, **characterised in that** each fine measuring unit (20, 20') has a calibration unit (37).

12. Distance sensor (1) according to claim 11, **characterised in that** measurement inaccuracies due to different delay times of the delay elements (40) of the delay lines (31) are compensated for by means of the calibration unit (37).

13. Distance sensor (1) according to one of claims 11 or 12, **characterised in that** a statistical calibration is carried out by means of the calibration unit (37).

14. Distance sensor (1) according to one of claims 1 to 13, **characterised in that** the TDC unit (17) has a computer unit (24) in which output signals generated with the coarse measuring unit (21) and the delay elements (40) are processed.

15. Distance sensor (1) according to one of claims 1 to 14, **characterised in that** the evaluation unit has a plurality of TDC units (17) to which the clock signal (11) is supplied with different phases.

16. Distance sensor (1) according to claim 15, **characterised in that** the measurement results determined in the TDC units (17) are calculated or compared with each other.

17. Distance sensor (1) according to one of claims 1 to 16, **characterised in that** the or each TDC unit (17) is implemented on an FPGA (2).

18. Distance sensor (1) according to one of claims 1 to 17, **characterised in that** this is an optical sensor whose transmitter (3) emits transmitted light beams (7).

19. Distance sensor (1) according to one of claims 1 to 17, **characterised in that** its transmitter (3) emits radio radiation, radar radiation or ultrasonic waves.

20. Distance sensor (1) according to one of claims 1 to 19, **characterised in that** it is designed as a scanner.

21. Method for determining the distance of objects (5) in a monitoring area by means of a distance sensor (1) with a transmitter (3) and a receiver (4), wherein transmission pulses emitted by the transmitter (3) are guided to the object (5) and from this are guided as reception pulses to the receiver (4), and with an evaluation unit in which the distance of the object (5) to the distance sensor (1) is determined from the transit time (6) of the transmission pulses to the object (5),
wherein two independently asynchronously operating oscillators (9, 10) are provided, one oscillator (10) producing pulsed, periodic clock signals (12) for transmitter operation and an oscillator (9) forms a clock generator which generates periodic clock signals (11) for controlling components of the evaluation unit, the clock generator generating a clock signal (11) which is asynchronous to the transmission pulses, in that the evaluation unit comprises at least one TDC unit (17), the latter having a coarse measuring unit (21) and two fine measuring units (20, 20') each with a delay line (31), the coarse measuring unit (21) being designed to count whole clock pulses (a) of the clock signal (11), in that a first fine measuring unit (20) is started with a transmission pulse, the coarse measuring unit (21) being started therewith and the time interval (c) between transmission of the transmission pulse and the subsequent start of a clock pulse (a) of the clock signal (11) being measured, in that the second fine measuring unit (20') is started with the receive pulse following the transmit pulse, the coarse measuring unit (21) being stopped with this and the time interval (c) between receiving the receive pulse and the subsequent start of a clock pulse (a) of the clock signal (11) being measured.

## Revendications

1. Capteur de distance (1) pour déterminer la distance d'objets (5) dans une zone de surveillance, comportant un émetteur (3) et un récepteur (4), dans lequel les impulsions de transmission émises par l'émetteur (3) sont guidées vers l'objet (5) et réfléchies par ce dernier en tant qu'impulsion de réception vers le récepteur (4), et comportant une unité d'évaluation dans laquelle la distance de l'objet (5) par rapport au capteur de distance (1) est déterminée à partir du temps de transit (6) des impulsions de transmission vers l'objet (5),
dans lequel deux oscillateurs (9, 10) fonctionnant indépendamment de manière asynchrone sont prévus, un oscillateur (10) générant des signaux d'horloge périodiques en forme d'impulsion (12) pour le fonctionnement de l'émetteur et un oscillateur (9) formant un générateur d'horloge qui génère des signaux d'horloge périodiques (11) pour commander des composants de l'unité d'évaluation, dans lequel le générateur d'horloge génère un signal d'horloge (11) qui est asynchrone par rapport à l'impulsion de transmission, en ce sens que l'unité d'évaluation comprend au moins une unité TDC (17), dans laquelle il y a une unité de mesure grossière (21) et deux unités de mesure fine (20, 20'), chacune avec une ligne de retard (31), dans laquelle l'unité de mesure grossière (21) est construite de la manière suivante comptage d'impulsions d'horloge entières (a) du signal d'horloge (11), en ce sens qu'une première unité de mesure fine (20) est démarrée avec une impulsion de transmission, l'unité de mesure grossière (21) étant démarrée avec celle-ci et l'intervalle de temps (c) entre la transmission de l'impulsion de transmission et le démarrage ultérieur d'une impulsion d'horloge (a) du signal d'horloge (11) étant mesuré, en ce sens que la seconde unité de mesure fine (20') démarre avec l'impulsion de réception suivant l'impulsion d'émission, l'unité de mesure grossière (21) étant arrêtée à ce moment-là et l'intervalle de temps (c) entre la réception de l'impulsion de réception et le démarrage ultérieur d'une impulsion d'horloge (a) du signal d'horloge (11) étant mesuré.

2. Capteur de distance (1) selon la revendication 1, **caractérisé en ce que** la ligne de retard (31) d'une unité de mesure fine (20, 20') comporte une série d'éléments de retard (40), le temps de propagation (6) d'une impulsion d'émission ou d'une impulsion de réception étant détecté par la détection de la propagation d'un front de signal le long des éléments de retard (40).

3. Capteur de distance (1) selon la revendication 2, **caractérisé par le fait que** les éléments de retard (40) ont des états de signal binaires, un élément de détection (32a) étant affecté à chaque élément de retard (40) pour détecter les états de signal.

4. Capteur de distance (1) selon la revendication 3, **caractérisé en ce que** le balayage homogène est effectué au moyen des éléments de balayage (32a) de telle sorte que chaque élément de balayage (32a) capte l'état du signal à la même composante d'un élément de retard (40).

5. Capteur de distance (1) selon la revendication 3, **caractérisé par le fait que** le balayage hétérogène est effectué au moyen des éléments de balayage (32a) de telle sorte que, dans une séquence alternée, un premier élément de balayage (32a) capte l'état du signal à une première composante d'un élément de retard (40) et un second élément de balayage (32a) capte l'état du signal à une seconde composante.

6. Capteur de distance (1) selon l'une des revendications 2 à 5, **caractérisé par le fait que** chaque élément de retard (40) consiste en un multiplexeur auquel est associée une porte XOR (41).

7. Capteur de distance (1) selon la revendication 3, **caractérisé par le fait que** chaque élément de détection (32a) est formé par une bascule.

8. Capteur de distance (1) selon l'une des revendications 1 à 7, **caractérisé par le fait que** chaque unité de mesure fine (20, 20') comporte une unité de correction (33) pour éliminer les erreurs de bulle.

9. Capteur de distance (1) selon la revendication 8, **caractérisé par le fait qu'**une séquence de signaux présente sur la ligne de retard (31) sous la forme d'un code de thermomètre est exécutée en un code à un coup au moyen de l'unité de correction (33).

10. Capteur de distance (1) selon la revendication 9, **caractérisé par le fait qu'**une unité de conversion (35) est disposée en aval de l'unité de correction (33), dans laquelle une conversion du code à un coup est convertie en une représentation à deux chiffres.

11. Capteur de distance (1) selon l'une des revendications 1 à 10, **caractérisé par le fait que** chaque unité de mesure fine (20, 20') comporte une unité d'étalonnage (37).

12. Capteur de distance (1) selon la revendication 11, **caractérisé par le fait que** les imprécisions de mesure dues aux différents temps de retard des éléments de retard (40) des lignes de retard (31) sont compensées à l'aide de l'unité d'étalonnage (37) sur le site .

13. Capteur de distance (1) selon l'une des revendications 11 ou 12, **caractérisé par le fait qu'**un étalonnage statistique est effectué au moyen de l'unité d'étalonnage (37).

14. Capteur de distance (1) selon l'une des revendications 1 à 13, **caractérisé par le fait que** l'unité TDC (17) possède une unité informatique (24) dans laquelle les signaux de sortie générés par l'unité de mesure grossière (21) et les éléments de retard (40) sont traités.

15. Capteur de distance (1) selon l'une des revendications 1 à 14, **caractérisé par le fait que** l'unité d'évaluation comporte plusieurs unités PMH (17) auxquelles le signal d'horloge (11) est fourni avec des phases différentes.

16. Capteur de distance (1) selon la revendication 15, **caractérisé par le fait que** les résultats de mesure déterminés dans les unités PMH (17) sont calculés ou comparés entre eux.

17. Capteur de distance (1) selon l'une des revendications 1 à 16, **caractérisé par le fait que** la ou chaque unité TDC (17) est implémentée sur un FPGA (2).

18. Capteur de distance (1) selon l'une des revendications 1 à 17, **caractérisé par le fait qu'**il s'agit d'un capteur optique dont l'émetteur (3) émet des faisceaux lumineux transmis (7).

19. Capteur de distance (1) selon l'une des revendications 1 à 17, **caractérisé par le fait que** son émetteur (3) émet un rayonnement radio, un rayonnement radar ou des ondes ultrasoniques.

20. Capteur de distance (1) selon l'une des revendications 1 à 19, **caractérisé par le fait qu'**il est conçu comme un scanner.

21. Procédé de détermination de la distance d'objets (5) dans une zone de surveillance au moyen d'un capteur de distance (1) doté d'un émetteur (3) et d'un récepteur (4), dans lequel les impulsions d'émission émises par l'émetteur (3) sont dirigées vers l'objet (5) et, à partir de là, vers le récepteur (4) en tant qu'impulsions de réception, et d'une unité d'évaluation dans laquelle la distance de l'objet (5) par rapport au capteur de distance (1) est déterminée à partir du temps de transit (6) des impulsions d'émission jusqu'à l'objet (5),
dans lequel deux oscillateurs (9, 10) fonctionnant indépendamment de manière asynchrone sont prévus, un oscillateur (10) produisant des signaux d'horloge périodiques pulsés (12) pour le fonctionnement de l'émetteur et un oscillateur (9) forme un générateur d'horloge qui génère des signaux d'horloge périodiques (11) pour commander des composants de l'unité d'évaluation, le générateur d'horloge générant un signal d'horloge (11) qui est asynchrone par rapport aux impulsions de transmission, en ce sens que l'unité d'évaluation comprend au moins une unité TDC (17), cette dernière ayant une unité de mesure grossière (21) et deux unités de mesure fine (20, 20') chacune avec une ligne de retard (31), l'unité de mesure grossière (21) étant conçue pour compter des impulsions d'horloge entières (a) du signal d'horloge (11), en ce sens qu'une première unité de mesure fine (20) est démarrée avec une impulsion d'émission, l'unité de mesure grossière (21) étant démarrée en même temps et l'intervalle de temps (c) entre l'émission de l'impulsion d'émission et le démarrage ultérieur d'une impulsion d'horloge (a) du signal d'horloge (11) étant mesuré, en ce sens que la seconde unité de mesure fine (20') démarre avec l'impulsion de réception suivant l'impulsion d'émission, l'unité de mesure grossière (21) étant arrêtée en même temps et l'intervalle de temps (c) entre la réception de l'impulsion de réception et le démarrage ultérieur d'une impulsion d'horloge (a) du signal d'horloge (11) étant mesuré.
